# EUROPÄISCHE PATENTSCHRIFT

(11) **EP 2 572 092 B1**
(45) Veröffentlichungstag und Bekanntmachung des Hinweises auf die Patenterteilung: **18.06.2014**
(21) Anmeldenummer: 11743418.3
(22) Anmeldetag: 19.05.2011
(51) Int. Cl.: F02C 6/12, F01D 25/24

(54) **TUBINENGEHÄUSE EINES ABGASTURBOLADERS**
TURBINE HOUSING OF AN EXHAUST GAS TURBOCHARGER
CARTER DE TURBINE D'UN TURBOCOMPRESSEUR À GAZ D'ÉCHAPPEMENT

(30) Priorität: 21.05.2010 DE 102010022218
(43) Veröffentlichungstag der Anmeldung: 27.03.2013
(73) Patentinhaber: Benteler Automobiltechnik GmbH, 33102 Paderborn (DE)
(72) Erfinder: SMATLOCH, Christian, 33100 Paderborn (DE); GRUSSMANN, Elmar, 33184 Altenbeken (DE)
(74) Vertreter: Griepenstroh, Jörg
(86) Internationale Anmeldenummer: PCT/DE2011/001087
(87) Internationale Veröffentlichungsnummer: WO 2011/153987

(56) Entgegenhaltungen:
- EP-A1- 0 918 140
- EP-A1- 1 895 120
- EP-A2- 2 180 163
- DE-C1- 10 223 838

## Beschreibung

Die vorliegende Erfindung betrifft ein Turbinengehäuse eines Abgasturboladers gemäß den Merkmalen im Oberbegriff von Patenanspruch 1.

Verbrennungskraftmaschinen insbesondere im Einsatz für Kraftfahrzeuge werden in zunehmendem Maße durch Strömungsmaschinen aufgeladen, um den Wirkungsgrad weiter zu steigern und damit den Kraftstoffverbrauch zu senken. Bevorzugt werden als Strömungsmaschinen Turbolader eingesetzt. Dabei werden die Turbolader und insbesondere die Turboladergehäuse sehr genau an die Leistungscharakteristik des jeweiligen Motors angepasst.

Damit der Turbolader selber mit einem hohen Wirkungsgrad arbeiten kann, ist die Einhaltung exakter Spaltmaße einzelner Bauteile des Turboladers vor, während und nach dem Betrieb von besonderer Bedeutung. Zwischen den einzelnen Betriebszuständen treten Temperaturunterschiede von bis zu mehreren 100°C auf, die bei den verschiedenen Bauteilen und eingesetzten Materialien sowie Materialstärken voneinander abweichende Ausdehnungen der Bauteile untereinander zur Folge haben. Im Falle der Ausdehnung ändern sich auch die Spaltmaße, sodass ein unerwünschtes Blowby innerhalb des Turboladers auftreten kann. Hierdurch reduziert sich der Wirkungsgrad des Turboladers. Ebenfalls kann es dazu kommen, dass die Bauteile durch unterschiedliche Ausdehnungen miteinander in Kontakt kommen. Schlimmstenfalls entstehen Kollisionen der Bauteile untereinander, die Schäden oder aber einen totalen Ausfall des Turboladers mit sich bringen.

Weiterhin ist die Gewichtsreduzierung aller im Kraftfahrzeugbau eingesetzten Materialien und Komponenten von besonderer Bedeutung. Hierbei steht die Herstellung eines Turboladers, insbesondere eines Turboladergehäuses in Blechbauweise unter dem Aspekt einer Möglichkeit, einen Abgasturbolader besonders gewichtsoptimiert herzustellen.

In der DE 100 22 0 52 A1 wird die Entkoppelung von abgasführenden Bauteilen und tragenden bzw. dichtenden Außenstrukturen vorgeschlagen. Während die abgasführenden Bauteile eines Turboladers hohen thermischen Belastungen ausgesetzt sind, sodass sie im Betrieb glühen, sind die thermischen Belastungen der dichtenden Außenstrukturen bedeutend geringer. Allerdings unterliegt auch das Außengehäuse besonders in den Bereichen der Anbindung an das Lagergehäuse eines Turboladers und auch an den Einströmseiten des relativ heißen Abgases sehr hohen thermischen und strömungstechnischen Belastungen.

Aus der EP 2 180 163 A2 ist ein Turbinengehäuse eines Abgasturboladers bekannt, welches ein Außengehäuse und ein Innengehäuse aufweist, wobei das Innengehäuse mit einem rohrförmigen Stutzen und einem Auslassrohr zum Anschluss an eine Abgasanlage ausgebildet ist. Das Auslassrohr ist mit dem rohrförmigen Stutzen relativverschieblich über eine Dichtlippe gekoppelt, wobei die Dichtlippe nach innen umgestülpt auf den Stutzen aufgeschoben ist.

Ferner ist aus der DE 102 23 838 C1 eine Verbrennungskraftmaschine mit wenigstens einem endseitig einer Hohlstruktur angefügten Flansch bekannt, wobei die Hohlstruktur einen Außenmantel und einen Innenmantel besitzt. Der Innenmantel hat dabei eine U-förmige Bördelung, die den Außenmantel außen umfänglich umgreift, wobei die Börderlung zusammen mit dem Endabschnitt in den Flansch selbst eingesteckt ist.

Das Außengehäuse eines Abgasturboladers besteht in der Regel aus umgeformten Blechschalen, die üblicherweise über thermische Fügeverfahren mit Lagerflanschen verschweißt sind. Ebenfalls mit den Lagerflanschen gekoppelt, ist ein Innengehäuse des Abgasturboladers.

In der Regel liegen die Innengehäuse an den Lagerflanschen an oder sind zusätzlich mit diesen stoffschlüssig gekoppelt. Hier kann es jedoch im Falle des Anliegens über die verschiedenen thermischen Ausdehnungskoeffizienten zu Undichtigkeiten und somit zu einem Blowby kommen. Im Falle einer stoffschlüssigen Koppelung ist die Wärmeeinflusszone des thermischen Fügevorgangs geometrisch und werkstofftechnisch durch den thermischen Fügevorgang geschwächt. An dieser Stelle kann es unter extremen Belastungen zu Ermüdungsbrüchen oder aber auch Rissbildungen kommen.

Aufgabe der vorliegenden Erfindung ist es daher, die Dichtigkeit und die Dauerhaltbarkeit eines Abgasturboladers derart zu erhöhen, dass thermische Belastungen nicht zu einem frühen Bauteilversagen führen und dass thermisch bedingte Ausdehnungen durch den Aufbau des Abgasturboladers kompensiert werden.

Die zuvor genannte Aufgabe wird durch ein Turbinengehäuse für einen Abgasturbolader mit den Merkmalen im Patentanspruch 1 gelöst.

Vorteilhafte Ausführungsvarianten der vorliegenden Erfindung sind Bestandteil der abhängigen Patentansprüche.

Das erfindungsgemäße Turbinengehäuse eines Abgasturboladers, welches ein Außengehäuse umfasst, in dem ein Innengehäuse mit einem rohrförmigen Stutzen und ein Auslassrohr zum Anschluss an eine Abgasanlage angeordnet sind, wobei das Auslassrohr mit dem rohrförmigen Stutzen relativ verschieblich über eine Dichtlippe gekoppelt ist, zeichnet sich dadurch aus, dass die Dichtlippe nach innen umgestülpt auf den Stutzen aufgeschoben ist und eine Schiebehülse auf dem Stutzen angeordnet ist, wobei die Schiebehülse und der Stutzen einen Spalt bilden, in dem ein Ende der Dichtlippe aufgenommen ist.

Besonders vorteilig bei dem erfindungsgemäßen Aufbau ist es, dass durch die nach innen umgestülpte Dichtlippe zwischen dem Stutzen und dem Auslassrohr eine Kompensation infolge unterschiedlicher thermischer Ausdehnung der einzelnen Bauteile zueinander erfolgen kann. Die Dichtlippe weist hierzu besonders vorteilhaft eine sehr dünne Wandstärke auf, wodurch ein Gleiten und/oder Abrollen der Dichtlippe auf dem Stutzen ermöglicht wird.

Die Dichtlippe liegt wiederum auf dem Stutzen, insbesondere formschlüssig, ganz besonders bevorzugt mit einer Presspassung, auf. Aufgrund der Druckdifferenzen zwischen dem Innengehäuse und dem Außengehäuse des Abgasturboladers kann es jedoch dazu kommen, dass die Dichtlippe sich von dem Stutzen abhebt und somit löst. Hierbei kommt es zu sogenannten BlowBy-Effekten, welche den Wirkungsgrad des Abgasturboladers herabsetzen. Zur Kompensation des Abhebens ist eine Schiebehülse auf dem Stutzen derart angeordnet, dass zwischen einer Dichtschulter der Schiebehülse und dem Stutzen selber ein Spalt entsteht, in dem ein Ende der Dichtlippe angeordnet ist. Die Schiebehülse, insbesondere der Dichtschulterbereich, nimmt somit in dem Spalt das Ende der Dichtlippe auf und legt dieses zusätzlich formschlüssig an den Stutzen an. Insbesondere kann dann wiederum im Rahmen der Erfindung zwischen der Dichtschulter und der Dichtlippe, respektive dem Stutzen, eine Presspassung ausgebildet sein. In der Folge wird ein Abheben der Dichtlippe verhindert.

In einer weiteren vorteilhaften Ausführungsvariante der vorliegenden Erfindung ist die Dichtlippe zusätzlich in dem Spalt derart gelagert, dass Relativbewegungen des Endes der Dichtlippe möglich sind. Hierdurch werden Spannungsrisse und/oder sonstige metallurgische Defekte im Material der Dichtlippe vermieden.

In einer vorteilhaften Ausführungsvariante der vorliegenden Erfindung ist der Spalt parallel zu einer Drehachse des Turbinenrades orientiert auf dem Stutzen umlaufend angeordnet, wobei der Spalt zwischen einer Außenmantelfläche des Stutzens und einer Dichtschulter der Schiebehülse ausgebildet ist. Insbesondere ist der Spalt zum Turbinenrad hin orientiert, so dass die Dichtschulter und auch die Dichtlippe nicht der direkten Abgasströmung ausgesetzt sind. Hierdurch wird die Lebensdauer der erfindungsgemäßen Koppelung erhöht.

Vorteilhaft ist das Ende der Dichtlippe in dem Spalt relativ verschieblich gelagert. Das Ende der Dichtlippe kann somit zwischen der Dichtschulter und dem Stutzen gleiten, weshalb ein Abreißen der Dichtlippe aufgrund der unterschiedlichen Absolutdrücke im Innengehäuse und zwischen Innengehäuse und Außengehäuse vermieden wird.

In einer weiteren vorteilhaften Ausführungsvariante der vorliegenden Erfindung weist das Ende der Dichtlippe auf einer Stutzenseite und/oder Schiebehülsenseite zumindest bereichsweise eine gegenüber der restlichen Dichtlippe rauere Oberfläche auf. Durch die in diesen Bereichen rauere Oberfläche ist es möglich, dass das Gleiten der Dichtlippe auf ein gewünschtes Maß einstellbar und/oder reduzierbar ist. Das Ende der Dichtlippe kann durch die raue Oberfläche auch lagefixiert werden. Ein entsprechender Eingriff an der Dichtschulter und/oder der Außenmantelfläche des Stutzens erfolgt aufgrund einer Mikroverzahnung zwischen rauer Oberfläche der Dichtlippe und der jeweils korrespondierenden zuvor genannten Oberfläche.

In einer weiteren vorteilhaften Ausführungsvariante ist das Dichtschulterende radial nach außen zeigend angestellt, vorzugsweise weist das Dichtschulterende einen Radius auf. Hierdurch wird eine Beschädigung der gleitenden bzw. abrollenden Dichtlippe vermieden. Kommt sie in den Bereich des Dichtschulterendes, so legt sie sich an das angestellte Ende bzw. den hier ausgebildeten Radius an. Unter einem angestellten Ende kann auch ein umlaufender Kragen verstanden werden.

In einer weiteren vorteilhaften Ausführungsvariante ist die Schiebehülse mit einem Ende des Stutzens stoffschlüssig gekoppelt, vorzugsweise durch ein thermisches Fügeverfahren. Insbesondere kann hier ein Schweißverfahren angewendet werden, beispielsweise ein WIG-Schweißverfahren, Laserschweißverfahren oder ein MAG-Schweißverfahren. Durch die stoffschlüssige Koppelung wird sichergestellt, dass die Schiebehülse stets ihre Position inne hält. Ein Verschieben oder Verrutschen der Schiebehülse aufgrund unterschiedlicher thermischer Ausdehnungen zwischen Stutzen und Schiebehülse selber wird somit vermieden. Die Wärmeeinflusszone der thermischen Koppelung zwischen dem Ende des Stutzens und der Schiebehülse ist somit weitestgehend entfernt gegenüber der schmalen Dichtlippe. Während des Produktionsvorganges des erfindungsgemäßen Turbinengehäuses wird somit eine Beschädigung der Dichtlippe vermieden.

In einer weiteren vorteilhaften Ausführungsvariante ist auf dem Auslassrohr auch ein Stützring angeordnet, wobei das Auslassrohr und der Auslassrohrstützring vorzugsweise miteinander thermisch gekoppelt sind. Optional ist es möglich, die Dichtlippe zusätzlich durch thermisches Fügen zu koppeln. Hierdurch wird sichergestellt, dass das Auslassrohr und auch der Auslassrohrstützring sowie optional die Dichtlippe sicher und fest miteinander gekoppelt sind und hier kein Verrutschen über den gesamten Betriebsdauerzeitraum des erfindungsgemäßen Turbinengehäuses sichergestellt wird. Vorzugsweise ist das Auslassrohr selber mit einem Kragen radial nach innen umgestellt und der Auslassrohrstützring mit einem Kragen radial nach außen umgestellt, so dass hier wiederum durch ein Gleiten bzw. Abrollen der Dichtlippe keine Beschädigung in diesem Bereich erfolgt.

Vorzugweise ist in den Koppelungsstellen der Dichtlippe mit dem Auslassrohr und/oder dem Stutzen eine Übermaßpassung ausgebildet. Die Gasleckage aufgrund der Presspassung in diesen Bereichen wird weitestgehend reduziert. Hierdurch wird ein hoher Wirkungsgrad über den gesamten Einsatzzeitraum bei verschiedensten Betriebsbedingungen des erfindungsgemäßen Turbinengehäuses sichergestellt.

Weiterhin bevorzugt ist in den Koppelungsstellen der Dichtlippe mit der Dichtschulter und/oder dem Auslassrohrstützring eine Übergangspassung oder eine Übermaßpassung ausgebildet. Hierdurch wird sichergestellt, dass die zusätzliche Passung, hervorgerufen durch die Dichtschulter und/oder den Außenrohrstützring, das Abheben der Dichtlippe infolge der Druckdifferenz zwischen einem Innensystem und einem Außensystem weiterhin kompensiert. Auch dies stellt einen hohen Wirkungsgrad während unterschiedlicher Betriebssituationen und/oder über die gesamte Einsatzdauer des erfindungsgemäßen Turbinengehäuses sicher.

Die erfindungsgemäße Koppelung des Turbinengehäuses zwischen dem Innensystem und dem Außensystem zeichnet sich dadurch aus, dass das Innengehäuse gegenüber dem Auslassrohr radial und axial beweglich, bezogen auf die Turbinenraddrehachse, gelagert ist. Die unterschiedlichen thermischen Ausdehnungen werden somit durch Relativverschiebung kompensiert, ohne Dichtigkeitseinbußen und ohne die Lebensdauer aufgrund mechanischer Kontakte und somit sich einstellender Defekte zu beeinflussen. Damit stets eine gute Relatiwerschieblichkeit der Dichtlippe gegeben ist, weist diese bevorzugt eine Wandstärke von weniger als 0,5 mm, bevorzugt weniger als 0,2 mm auf. Hierdurch wird bei eingesetzten metallischen Werkstoffen, insbesondere Edelstahlwerkstoffen, eine ausreichend genügende Druckdichtigkeit, bei gleichzeitiger flexibler Gleitmöglichkeit, sichergestellt. Die Dichtlippe besteht aus hitzebeständigen Stahlwerkstoffen. Insbesondere ist die Dichtlippe aus einer Nickelbasislegierung hergestellt.

In einer weiteren vorteilhaften Ausführungsvariante der vorliegenden Erfindung ist die Dichtlippe doppelwandig ausgebildet. Hierdurch ist das System der Dichtlippe zum einen redundant ausgebildet, zum anderen besteht die Möglichkeit, durch direkt aneinander liegende Dichtlippen, eine gute Flexibilität durch dünnwandige Ausgestaltung, bei gleichzeitiger guter Druckdichtigkeit aufgrund zwei direkt aufeinanderliegenden Dichtlippen in Form von Druckwänden, sicherzustellen.

Weitere Vorteile, Merkmale, Eigenschaften und Aspekte der vorliegenden Erfindung sind Bestandteil der folgenden Beschreibung. Bevorzugte Ausführungsformen sind in den schematischen Zeichnungen dargestellt. Diese dienen dem einfachen Verständnis der Erfindung. Es zeigen:
- Figur 1: eine Querschnittsansicht eines Innengehäuses verbunden über eine Dichtlippe mit einem Auslassrohr und
- Figur 2: eine Detailansicht des erfindungsgemäßen Aufbaus mit Dichtlippe.

In der Beschreibung werden für gleiche oder ähnliche Bauteile dieselben Bezugszeichen verwendet, auch wenn eine wiederholte Beschreibung aus Vereinfachungsgründen entfällt.

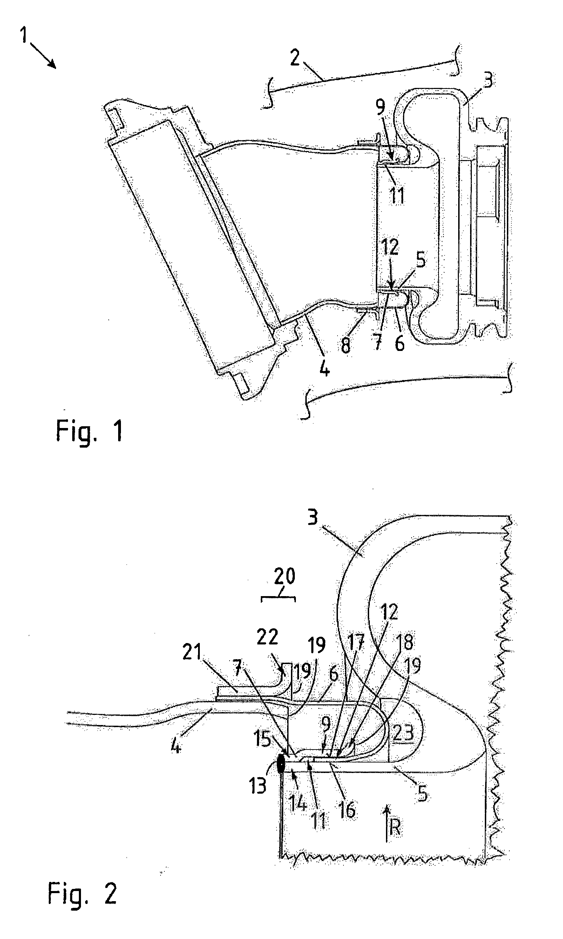

Figur 1 zeigt ein erfindungsgemäßes Turbinengehäuse 1 eines Abgasturboladers, welches ein schematisch angedeutetes Außengehäuse 2 und ein darin befindliches Innengehäuse 3 aufweist. Das Innengehäuse 3 weist in Richtung eines Auslassrohrs 4 einen Stutzen 5 auf, wobei zwischen dem Auslassrohr 4 und dem Stutzen 5 eine Dichtfunktion über eine Dichtlippe 6 hergestellt ist. Damit die Dichtlippe 6 sicher sowohl auf dem Stutzen 5, als auch auf dem Auslassrohr 4 sitzt, ist diese jeweils mit einem Stützring gesichert. Auf dem Stutzen 5 ist der Stützring in Form einer Schiebehülse 7 ausgebildet, auf dem Auslassrohr 4 in Form eines Auslassrohrstützringes 8. Die Schiebehülse 7 weist weiterhin eine Dichtschulter 9 auf. Zwischen der Dichtschulter 9 und der Außenmantelfläche 10 des Stutzens 5 entsteht somit ein Spalt 11, in dem ein Ende 12 der Dichtlippe 6 angeordnet ist.

Figur 2 zeigt eine Detailansicht der erfindungsgemäßen Koppelung zwischen Auslassrohr 4 und Stutzen 5 mit einer Dichtlippe 6. Die Schiebehülse 7 ist bevorzugt über eine thermische Fügenaht 13 mit einem Stutzenende 14 gekoppelt. Insbesondere ist die thermische Fügenaht 13 ebenfalls an einem Schiebehülsenende 15 der Schiebehülse 7 angeordnet. Das Ende 12 der Dichtlippe 6 ist relativ verschieblich in dem Spalt 11 gelagert. Optional kann eine Stutzenseite 16 und/oder eine Schiebehülsenseite 17 der Dichtlippe 6 eine im Gegensatz zum restlichen Material der Dichtlippe 6 rauere Oberfläche aufweisen.

Weiterhin besonders bevorzugt ist ein Dichtschulterende 18 der Schiebehülse 7 mit einem Kragen 19 radial nach außen in Radialrichtung R angestellt. Hierdurch ergibt sich eine weiche Kante, so dass die Dichtlippe 6 bei Kontakt mit dem Dichtschulterende 18 keine mechanische Beschädigung erfährt. Ebenfalls ist ein Auslassrohrende 20 mit einem Kragen 19 radial nach innen und ein Auslassrohrstützring 21 mit seinem Auslassrohrstützringende 22 mit einem Kragen 19 radial nach außen zeigend ausgeführt. Ebenfalls kommt es hier zu keinerlei mechanischer Beschädigung im Falle des Kontaktes mit der Dichtlippe 6.

Das Innengehäuse 3 weist weiterhin eine Dichtschulteraufnahme 23 in Form einer Ausbuchtung auf. Im Falle des Gleitens und/oder der Axialbewegung kann die Dichtlippe 6 sich somit in die Dichtschulteraufnahme 23 axial frei bewegen, ohne dass die Dichtlippe 6 an der Dichtschulteraufnahme 23 zur Anlage gelangt. Es kommt hier zu keinerlei mechanischer Beschädigung aufgrund der Vermeidung von scharfen Kanten.

### Bezugszeichen:

- 1 -: Turbinengehäuse
- 2 -: Außengehäuse
- 3 -: Innengehäuse
- 4 -: Auslassrohr
- 5 -: Stutzen
- 6 -: Dichtlippe
- 7 -: Schiebehülse
- 8 -: Auslassrohrstützring
- 9 -: Dichtschulter
- 10 -: Außenmantelfläche zu 5
- 11 -: Spalt
- 12 -: Ende zu 6
- 13 -: thermische Fügenaht
- 14 -: Stutzenende
- 15 -: Schiebehülsenende
- 16 -: Stutzenseite
- 17 -: Schiebehülsenseite
- 18 -: Dichtschulterende
- 19 -: Kragen
- 20 -: Auslassrohrende
- 21 -: Auslassrohrstützring
- 22 -: Auslassrohrstützringende
- 23 -: Dichtschulteraufnahme

- R -: Radialrichtung

## Patentansprüche

1. Turbinengehäuse (1) eines Abgasturboladers, welches ein Außengehäuse (2) umfasst, in dem ein Innengehäuse (3) mit einem rohrförmigen Stutzen (5) und ein Auslassrohr (4) zum Anschluss an eine Abgasanlage angeordnet sind, wobei das Auslassrohr (4) mit dem rohrförmigen Stutzen (5) relativverschieblich über eine Dichtlippe (6) gekoppelt ist, **dadurch gekennzeichnet, dass** die Dichtlippe (6) nach innen umgestülpt auf den Stutzen (5) aufgeschoben ist und eine Schiebehülse (7) auf dem Stutzen (5) angeordnet ist, wobei die Schiebehülse (7) und der Stutzen (5) einen Spalt (11) bilden, in dem ein Ende (12) der Dichtlippe (6) aufgenommen ist.

2. Turbinengehäuse nach Anspruch 1, **dadurch gekennzeichnet, dass** der Spalt (11) parallel zu einer Drehachse des Turbinenrades orientiert auf dem Stutzen (5) umlaufend angeordnet ist, wobei der Spalt (11) zwischen einer Außenmantelfläche (10) des Stutzens (5) und einer Dichtschulter (9) der Schiebehülse (7) ausgebildet ist.

3. Turbinengehäuse nach Anspruch 1 oder 2, **dadurch gekennzeichnet, dass** das Ende (12) der Dichtlippe (6) in dem Spalt (11) relativverschieblich gelagert ist.

4. Turbinengehäuse nach einem der Ansprüche 1 bis 3, **dadurch gekennzeichnet, dass** das Ende (12) der Dichtlippe (6) auf einer Stutzenseite (16) und/oder Schiebehülsenseite (17) zumindest bereichsweise eine gegenüber der restlichen Dichtlippe (6) rauere Oberfläche aufweist.

5. Turbinengehäuse nach einem der Ansprüche 1 bis 4, **dadurch gekennzeichnet, dass** ein Dichtschulterende (18) radial nach außen zeigend angestellt ist, vorzugsweise weist das Dichtschulterende (18) einen Radius auf.

6. Turbinengehäuse nach einem der Ansprüche 1 bis 5, **dadurch gekennzeichnet, dass** die Schiebehülse (7) mit einem Ende des Stutzens (5) stoffschlüssig gekoppelt ist, vorzugsweise durch ein thermisches Fügeverfahren.

7. Turbinengehäuse nach einem der Ansprüche 1 bis 6, **dadurch gekennzeichnet, dass** der Auslassrohrstützring (21), das Auslassrohr (4) und optional die Dichtlippe (6) stoffschlüssig miteinander gekoppelt sind.

8. Turbinengehäuse nach einem der Ansprüche 1 bis 7, **dadurch gekennzeichnet, dass** der Auslassrohrstützring (21) in Richtung des Innengehäuses (3) aufgeweitet ist.

9. Turbinengehäuse nach einem der Ansprüche 1 bis 8, **dadurch gekennzeichnet, dass** in den Koppelungsstellen der Dichtlippe (6) mit dem Auslassrohr (4) und/oder dem Stutzen (5) eine Übermaßpassung ausgebildet ist.

10. Turbinengehäuse nach einem der Ansprüche 1 bis 9, **dadurch gekennzeichnet, dass** in den Koppelungsstellen der Dichtlippe (6) mit der Dichtschulter (9) und/oder dem Auslassrohrstützring (21) eine Übermaßpassung ausgebildet ist.

11. Turbinengehäuse nach einem der Ansprüche 1 bis 10, **dadurch gekennzeichnet, dass** das Innengehäuse(3) gegenüber dem Auslassrohr (4) radial und axial beweglich, bezogen auf eine Turbinenraddrehachse, gelagert ist.

12. Turbinengehäuse nach einem der Ansprüche 1 bis 11, **dadurch gekennzeichnet, dass** die Dichtlippe (6) eine Wandstärke von weniger als 0,5 mm, bevorzugt weniger als 0,2 mm aufweist.

13. Turbinengehäuse nach einem der Ansprüche 1 bis 12, **dadurch gekennzeichnet, dass** die Dichtlippe (6) aus einer Nickelbasislegierung besteht.

14. Turbinengehäuse nach einem der Ansprüche 1 bis 13, **dadurch gekennzeichnet, dass** die Dichtlippe (6) doppelwandig ausgebildet ist.

## Claims

1. Turbine housing (1) of an exhaust gas turbocharger, comprising an outer housing (2) in which an inner housing (3)having a tubular nozzle (5) and an outlet duct (4) for connection to an exhaust gas systemare arranged, the outlet duct (4) being coupled to the tubular nozzle (5)by means of a sealing lip (6) so as to be movable relative to the nozzle, **characterised in that** the sealing lip (6) is pushed onto the nozzle (5) in an inwardly everted manner and a sliding sleeve (7) is arranged on the nozzle (5), the sliding sleeve (7) and the nozzle (5) forming a gap (11) which receives an end (12) of the sealing lip (6).

2. Turbine housing according to claim 1, **characterised in that** the gap (11) circumferentially surrounds the nozzle (5) so as to be oriented parallel to a rotational axis of the turbine wheel, the gap (11) being formed between an outer generated surface (10) of the nozzle (5) and a sealing shoulder (9) of the sliding sleeve (7).

3. Turbine housing according to either claim 1 or claim 2, **characterised in that** the end (12) of the sealing lip (6) is mounted in the gap (11) for relative movement.

4. Turbine housing according to any of claims 1 to 3, **characterised in that** at least some regions of the end (12) of the sealing lip (6) have a surface on oneside of the nozzle (16) and/or on one side of the sliding sleeve (17) which is comparatively rough relative to the rest of the sealing lip (6).

5. Turbine housing according to any of claims 1 to 4, **characterised in that** an end (18) of the sealing shoulder is angled to point radially outwards, and the end(18) of the sealing shoulder preferably has a radius.

6. Turbine housing according to any of claims 1 to 5, **characterised in that** the sliding sleeve (7) is integrally bonded to an end of the nozzle (5), preferably by a thermal joining process.

7. Turbine housing according to any of claims1 to 6, **characterised in that** the outlet duct support ring (21), the outlet duct (4) and optionally the sealing lip (6) are integrally bonded to one another.

8. Turbine housing according to any of claims 1 to 7, **characterised in that** the outlet duct support ring (21) is widened in the direction of the inner housing (3).

9. Turbine housing according to any of claims 1 to 8, **characterised in that** an interference fit is formed in the sites where the sealing lip (6) is coupled to the outlet duct (4) and/or the nozzle (5).

10. Turbine housing according to any of claims 1 to 9, **characterised in that** an interference fit is formed in the sites where the sealing lip (6) is coupled to the sealing shoulder (9) and/or the outlet duct support ring (21).

11. Turbine housing according to any of claims 1 to 10, **characterised in that** the inner housing (3) is supported for radial and axial movement relative to the outlet duct (4) with respect to a turbine wheel rotational axis.

12. Turbine housing according to any of claims 1 to 11, **characterised in that** the sealing lip (6) has a wall thickness of less than 0.5 mm, preferably of less than 0.2 mm.

13. Turbine housing according to any of claims 1 to 12, **characterised in that** the sealing lip (6) is made of a nickel-based alloy.

14. Turbine housing according to any of claims 1 to 13, **characterised in that** the sealing lip (6) is configured to be double-walled.

## Revendications

1. Carter de turbine (1) d'un turbocompresseur à gaz d'échappement, qui comprend un carter externe (2), dans lequel un carter interne (3) avec une buse tubulaire (5) et un tube d'échappement (4) sont agencés pour se raccorder sur une installation de gaz d'échappement, dans lequel le tube d'échappement (4) est couplé à la buse tubulaire (5) de manière à pouvoir effectuer un mouvement relatif via une lèvre d'étanchéité (6), **caractérisé en ce que** la lèvre d'étanchéité (6) est glissée sur la buse (5), tournée vers l'intérieur, et un manchon coulissant (7) est disposé sur la buse (5), dans lequel le manchon coulissant (7) et la buse (5) forment un intervalle (11) dans lequel une extrémité (12) de la lèvre d'étanchéité (6) est reçue.

2. Carter de turbine selon la revendication 1, **caractérisé en ce que** l'intervalle (11) est aménagé orienté parallèlement à un axe de rotation de la roue de turbine circonférentiellement sur la buse (5), dans lequel l'intervalle (11) est formé entre une surface d'enveloppe externe (10) de la buse (5) et un épaulement étanche (9) du manchon coulissant (7).

3. Carter de turbine selon la revendication 1 ou la revendication 2, **caractérisé en ce que** l'extrémité (12) de la lèvre d'étanchéité (6) est montée dans l'intervalle (11) de manière à pouvoir effectuer un mouvement relatif.

4. Carter de turbine selon l'une quelconque des revendications 1 à 3, **caractérisé en ce que** l'extrémité (12) de la lèvre d'étanchéité (6) présente sur un côté buse (16) et/ou sur un côté manchon coulissant (17) au moins par zones une surface plus brute par rapport à la lèvre d'étanchéité restante (6).

5. Carter de turbine selon l'une quelconque des revendications 1 à 4, **caractérisé en ce qu'**une extrémité (18) de l'épaulement étanche est disposée tournée radialement vers l'extérieur, l'extrémité (18) de l'épaulement étanche présentant de préférence un rayon.

6. Carter de turbine selon l'une quelconque des revendications 1 à 5, **caractérisé en ce que** le manchon coulissant (7) est couplé d'un seul tenant avec une extrémité de la buse (5), de préférence par un procédé d'assemblage thermique.

7. Carter de turbine selon l'une quelconque des revendications 1 à 6, **caractérisé en ce que** la couronne d'appui (21) du tube d'échappement, le tube d'échappement (4) et éventuellement la lèvre d'étanchéité (6) sont couplés l'un à l'autre d'un seul tenant.

8. Carter de turbine selon l'une quelconque des revendications 1 à 7, **caractérisé en ce que** la couronne d'appui (21) du tube d'échappement est évasée dans le sens du carter interne (3).

9. Carter de turbine selon l'une quelconque des revendications 1 à 8, **caractérisé en ce que**, aux points de couplage de la lèvre d'étanchéité(6) avec le tube d'échappement (4) et/ou la buse (5), il se fait un ajustement surdimensionné.

10. Carter de turbine selon l'une quelconque des revendications 1 à 9, **caractérisé en ce que**, aux points de couplage de la lèvre d'étanchéité (6) avec l'épaulement étanche (9) et/ou la couronne d'appui du tube d'échappement (21), il se fait un ajustement surdimensionné.

11. Carter de turbine selon l'une quelconque des revendications 1 à 10, **caractérisé en ce que** le carter interne (3) est monté mobile radialement et axialement par rapport au tube d'échappement (4) en rapport avec un axe de rotation de la roue de turbine.

12. Carter de turbine selon l'une quelconque des revendications 1 à 11, **caractérisé en ce que** la lèvre d'étanchéité (6) présente une épaisseur de paroi de moins de 0,5 mm, de préférence de moins de 0,2 mm.

13. Carter de turbine selon l'une quelconque des revendications 1 à 12, **caractérisé en ce que** la lèvre d'étanchéité (6) est constituée d'un alliage à base de nickel.

14. Carter de turbine selon l'une quelconque des revendications 1 à 13, **caractérisé en ce que** la lèvre d'étanchéité (6) présente une double paroi.
